# EUROPÄISCHE PATENTANMELDUNG

(11) **EP 0 726 115 A1**
(43) Veröffentlichungstag der Anmeldung: **14.08.1996**
(21) Anmeldenummer: 96890018.3
(22) Anmeldetag: 12.02.1996
(51) Int. Cl.: B22D 11/10, C22B 9/02

(54) **Giesswanne**

(30) Priorität: 13.02.1995 AT 257/95
(71) Anmelder: VOEST-ALPINE Stahl Linz GmbH, A-4031 Linz (AT)
(72) Erfinder: Petz, Erich, Dipl.-Ing., A-4481 Asten (AT)
(74) Vertreter: Miksovsky, Alexander, Dipl.-Ing.

(57) **Zusammenfassung**

Bei einer Gießwanne (1) zur Aufnahme und zur Filterung von Eisen-Metallschmelzen, welche im Bodenbereich eine Abführöffnung (5) zum Abziehen der Metallschmelze nach Durchtritt durch eine Umlenk- und/oder Filtereinrichtung aufweist, ist in der Gießwanne (1) ein im wesentlichen den gesamten, horizontalen Querschnitt der Gießwanne (1) überdeckendes, in an sich bekannter weise entfernbares, keramisches Filter (3) angeordnet, welches sich im wesentlichen in horizontaler Richtung erstreckt und mit Durchtrittsöffnungen (4) versehen ist, welche in der im wesentlichen in vertikaler Richtung verlaufenden Durchflußrichtung der Metallschmelze durch die Gießwanne (1) angeordnet sind, wodurch sich mit einer einfachen Konstruktion eine Reinigung bzw. Filterung von Metallschmelzen auch für hohe Gießgeschwindigkeiten erzielen läßt.

## Beschreibung

Die vorliegende Erfindung bezieht sich auf eine Gießwanne zur Aufnahme und zur Filterung von Eisen-Metallschmelzen, welche im Bodenbereich eine Abfuhröffnung zum Abziehen der Metallschmelze nach Durchtritt durch eine Umlenk- und/oder Filtereinrichtung aufweist.

Derartige Gießwannen, welche auch als Zwischenpfannen, Zwischengefäße oder Tundish bezeichnet werden, werden sowohl beim kontinuierlichen als auch diskontinuierlichen Gießen von Metallschmelzen eingesetzt. Es ist bekannt, Metallschmelzen, insbesondere Stahl, in derartigen Gießwannen zu behandeln oder zumindest sicherzustellen, daß ein Großteil der Verunreinigungen, insbesondere Schlacke, aus der Metallschmelze entfernt wird bzw. daß sich derartige Verunreinigungen bzw. Schlacken absetzen und leicht von der Metallschmelze entfernt werden können.

Eine Vorrichtung zum Filtern von metallischen Schmelzen ist beispielsweise aus der DE-OS 35 09 113 bekannt geworden, wobei bei dieser bekannten Ausführungsform zwei Platten in Strömungsrichtung der Metallschmelze und in Abstand hintereinander angeordnet sind, deren Bohrungen gegeneinander versetzt sind und zwischen denen eine die Strömung beruhigende Kammer vorgesehen ist. Dabei wird davon ausgegangen, daß die Abscheidung von Verunreinigungen aus einer metallischen Schmelze eine gewisse Zeitdauer erfordert, weshalb gemäß diesem bekannten Stand der Technik im Bereich der Filtervorrichtung die Strömung der Schmelze durch Verringerung der Strömungsgeschwindigkeit beruhigt werden soll, wobei darüberhinaus durch Versetzen der Durchtrittsbohrungen eine Umlenkung der Metallschmelze angestrebt wird, welche die Abscheidungsvorgänge begünstigen soll.

Eine abgewandelte Ausführungsform eines Zwischengefäßes bzw. Tundish zur Aufnahme bzw. Filterung einer Metallschmelze, wie beispielsweise Stahl, ist der EP-A-0 376 523 zu entnehmen, wobei ein Filterelement mit im wesentlichen in vertikaler Richtung verlaufenden Durchtrittsschlitzen vorgesehen ist, wobei auf einer Seite dieses Elementes die Metallschmelze zugeführt wird und auf der anderen Seite des Filterelementes aus dem Zwischengefäß bzw. der Gießwanne entnommen wird. Auch bei dieser Ausführungsform wird somit auf eine Umlenkung der Strömung der Metallschmelze für eine Begünstigung der Abscheidung von Verunreinigungen abgezielt, wobei weiters ein aus der Oberfläche der Metallschmelze vorragendes Wehr vorgesehen ist, um die einzelnen Teilbereiche in dem Tundish sicher voneinander zu trennen. Durch entsprechende Einbauten im Bereich des Bodens kann bei dieser bekannten Ausführungsform eine zusätzliche Verwirbelung der Metallschmelze hervorgerufen werden.

Gemäß einer weiteren bekannten Ausführungsform eines Tundish zur Aufnahme und Reinigung einer Metallschmelze gemäß der US-PS 5 071 107 ist vorgesehen, daß die Metallschmelze für eine Laminarisierung der Strömung durch ein mit im wesentlichen in horizontaler Richtung verlaufenden Durchtrittsöffnungen versehenes Wehr hindurchtritt, worauf in weiterer Folge um die Abflußöffnung aus der Gießwanne ein Filterelement vorgesehen ist. Der wesentliche Anteil der Filterwirkung soll hiebei durch ein im wesentlichen in vertikaler Richtung angeordnetes Filterelement erfolgen, so daß die Metallschmelze durch im wesentlichen horizontale Löcher bzw. Durchtrittsöffnungen durch dieses Filter hindurchtritt. Nachteilig bei dieser bekannten Ausführungsform ist, daß sich im Bereich unmittelbar vor dem Filter große Mengen von Verunreinigungen bzw. Schlacken ansammeln können, welche erstarren und unmittelbar zu einer Verlegung des Filterelementes führen können. In diesem Fall muß entweder der gesamte Tundish ersetzt werden oder es müssen zeitraubend die angelagerten, erkalteten Verunreinigungen gelöst werden.

Ausgehend von diesem bekannten Stand der Technik zielt die vorliegende Erfindung somit darauf ab, mit einer möglichst einfachen Vorrichtung für eine Filterung eine Metallschmelze hoher Güte bei einer möglichst hohen Gießgeschwindigkeit zu erzielen, wobei gleichzeitig ein Verlegen der Wanne mit erstarrter Schlacke weitgehend vermieden werden soll. Zur Lösung dieser Aufgabe ist die erfindungsgemäße Gießwanne im wesentlichen dadurch gekennzeichnet, daß in der Gießwanne ein im wesentlichen den gesamten, horizontalen Querschnitt der Gießwanne überdeckendes, in an sich bekannter Weise entfernbares, keramisches Filter angeordnet ist, welches sich im wesentlichen in horizontaler Richtung erstreckt und mit Durchtrittsöffnungen versehen ist, welche in der im wesentlichen in vertikaler Richtung verlaufenden Durchflußrichtung der Metallschmelze durch die Gießwanne angeordnet sind. Dadurch, daß das keramische Filter im wesentlichen den gesamten, horizontalen Querschnitt der Gießwanne überdeckt, wird ein entsprechend großer Durchtrittsquerschnitt für die Metallschmelze zur Verfügung gestellt, so daß der Filtervorgang in entsprechend kurzer Zeit vorgenommen werden kann. Bei Verwendung eines geeigneten keramischen Filters, welches gemäß der Erfindung entfernbar und somit leicht ersetzbar sein soll, hat sich herausgestellt, daß eine Umlenkung und Beruhigung bzw. Laminarisierung der Strömung in der Metallschmelze für eine ausreichende Abtrennung der Verunreinigungen bzw. Schlackenanteile nicht erforderlich ist, so daß erfindungsgemäß das im wesentlichen in horizontaler Richtung angeordnete Filter eine entsprechend große, wirksame Fläche zur Verfügung stellt. Weiters weist das Filter erfindungsgemäß im wesentlichen in der vertikalen Richtung, welche der Durchflußrichtung der Schmelze entspricht, verlaufende Durchtrittsöffnungen auf, sodaß die eingebrachte Schmelze unmittelbar unter Einfluß der Schwerkraft wiederum möglichst rasch durch das Filter hindurchtreten kann. Insgesamt läßt sich somit in der erfindungsgemäßen Gießwanne ein sehr rascher Filter- bzw. Reinigungsvorgang vornehmen, da auf vergleichsweise lange Beruhigungszeiten und Umlenkungen der Metallschmelze in der Gießwanne, wie dies gemäß dem bekannten Stand der Technik erforderlich war, verzichtet werden kann. Dadurch, daß lediglich das horizontal angeordnete Filter in der Wanne angeordnet ist, wird gleichzeitig vermieden, daß sich erstarrende Schlacke an vertikalen Einbauten der Wanne ablagern und somit das Gesamtvolumen der Wanne durch erstarrende Schlacke deutlich verringert wird.

Um zu verhindern, daß beim Einbringen der Metallschmelze in die Gießwanne in das Filterelement, welches im wesentlichen den gesamten Querschnitt der Gießwanne überdeckt, Schlacke unmittelbar eingebracht bzw. eingepreßt wird, ist gemäß einer bevorzugten Ausführungsform die Ausbildung so getroffen, daß im Bereich der Zufuhr der Metallschmelze in mit dem Filter fluchtender Ebene oder in einer oberhalb des Filters liegenden Ebene eine Prallvorrichtung, insbesondere ein Prallstein, in der Gießwanne angeordnet ist. Eine derartige Prallvorrichtung, insbesondere ein Prallstein, in einer mit der Ebene des Filters fluchtenden Ebene oder in einer darüberliegenden Ebene verhindert somit ein unmittelbares Auftreffen der Metallschmelze auf das Filter und bewirkt gleichzeitig eine gleichmäßigere Verteilung der Metallschmelze oberhalb des Filters in der Gießwanne, so daß in weiterer Folge für den Durchtritt und die Reinigung der Metallschmelze im wesentlichen die gesamte Filterfläche zur Verfügung steht.

Für den Fall, daß die Prallvorrichtung, insbesondere der Prallstein, oberhalb der Ebene des Filters angeordnet ist, ergibt sich der Vorteil, daß im wesentlichen der gesamte horizontale Querschnitt der Gießwanne vom Filter bedeckt sein kann und für den Durchtritt und die Reinigung der Metallschmelze genutzt werden kann. Für ein schonendes Einbringen der Metallschmelze in die Gießwanne ist für diesen Fall bevorzugt die Ausbildung so getroffen, daß die der Zufuhr der Metallschmelze zugewandte Oberfläche der Prallvorrichtung in einem Abstand von weniger als der Hälfte der Badhöhe der Metallschmelze, insbesondere etwa einem Drittel der Badhöhe, über der Ebene des Filters angeordnet ist. Durch diese Anordnung der Prallvorrichtung können Turbulenzen beim Einbringen der Metallschmelze in die bereits in der Gießwanne befindliche Metallschmelze weitestgehend verhindert werden und es steht darüberhinaus auch unterhalb der Prallvorrichtung ein ausreichendes Volumen zwischen dem Filter und der Prallvorrichtung zur Verfügung, so daß ein Erstarren der Metallschmelze in diesem Bereich vermieden werden kann.

Für eine besonders einfache und leichte Auswechselbarkeit des Filters ist gemäß einer weiteren bevorzugten Ausführungsform die Ausbildung so getroffen, daß das Filter in einem im Bereich des Bodens der Gießwanne angeordneten bzw. den Boden ausbildenden, auswechselbaren, an sich bekannten Rahmen aufgenommen ist. Für den Fall, daß sich die Prallvorrichtung, insbesondere der Prallstein, in der Ebene des Filters befindet, kann auch die Prallvorrichtung in dem Rahmen aufgenommen sein, so daß bei Wechsel des Filters gleichzeitig auch ein Wechsel der Prallvorrichtung vorgenommen wird. Für den Fall, daß der Prallstein in einer Ebene oberhalb des Filters angeordnet ist, weist der Rahmen das Filterelement auf. Durch Anordnung des Filterelementes in einem auswechselbaren Rahmen, welcher im Bereich des Bodens der Gießwanne angeordnet ist bzw. den Boden ausbildet, ist eine einfache Austauschmöglichkeit des Filters und somit eine rasche Wiedereinsetzbarkeit der Gießwanne sichergestellt. Es muß somit nur eine geringere Stillstandszeit der Gießwanne für den Tausch eines Filters in Betracht gezogen werden. Dies ergibt wesentliche Zeiteinsparungen gegenüber Ausbildungen, bei welchen im Bereich von Wehren oder im wesentlichen in vertikaler Richtung angeordneten Filterelementen sich ausbildende, erhärtete Ablagerungen entfernt werden mußten, wie dies beim bekannten Stand der Technik üblicherweise der Fall war. Erfindungsgemäß ist somit die Einsatzdauer der Gießwanne von der Einsatzdauer des bedeutend kostengünstigeren Filters weitestgehend unabhängig.

Um für unterschiedliche Anwendungszwecke und unterschiedliche Gießgeschwindigkeiten für das Erzielen gleichbleibender Stahlqualitäten im wesentlichen unveränderte Filterelemente einsetzen zu können, ist gemäß einer weiteren bevorzugten Ausführungsform die Ausbildung so getroffen, daß die Querschnittsfläche des Filters durch Blendenelemente veränderbar ist. Derartige Blendenelemente, welche für eine Verstellung der aktiven Querschnittsfläche des Filters einsetzbar sind, können in einfacher Weise beispielsweise in den das Filter aufnehmenden Rahmen integriert sein, so daß durch Wahl der lichten Durchtrittsöffnung des Filters, welche durch die Blendenelemente definiert ist, entsprechende Durchtrittsraten der Metallschmelzen einstellbar sind. Durch entsprechende Wahl der aktiven Durchtrittsflächen des Filters kann gleichzeitig die Verweildauer der Metallschmelze in der Gießwanne ebenfalls beeinflußt werden. Es kann weitgehend unabhängig von der gewünschten Durchtrittsfläche die gesamte Filterfläche im wesentlichen vollständig ausgenützt werden, wenn zeitlich aufeinander folgend unterschiedliche Querschnittsbereiche des Filters von den Blendenelementen freigegeben werden.

Um auch bei gegebenenfalls relativ geringen Durchtrittsgeschwindigkeiten der Metallschmelze und somit einer relativ langen Verweildauer derselben in dem Filter mit Sicherheit ein Erstarren der hindurchtretenden Metallschmelze zu verhindern, ist darüberhinaus die Ausbildung bevorzugt so getroffen, daß im Bereich des Filters und/oder der Prallvorrichtung eine Heizvorrichtung vorgesehen ist. Eine derartige Heizung, welche im wesentlichen nur den Bereich des Filters bzw. das Filter selber oder die Prallvorrichtung erhitzen soll, kann hiebei entsprechend klein dimensioniert und energiesparend ausgebildet sein. Eine Heizung der Prallvorrichtung kann insbesondere günstig sein, wenn diese oberhalb der Ebene des Filters angeordnet ist.

Um eine Oxidation oder andere chemische Reaktionen in der Metallschmelze nach dem Durchtritt durch das Filter weitestgehend zu verhindern, ist darüberhinaus die Ausbildung bevorzugt so getroffen, daß unterhalb der Ebene des Filters wenigstens eine Zuführöffnung zum Einbringen eines Inertgases in die gereinigte Metallschmelze vorgesehen ist.

Insbesondere für den Fall des Einsatzes der erfindungsgemäßen Gießwanne im Zusammenhang mit einem kontinuierlichen Gießverfahren muß für eine ausreichende Ausbringung der aufschwimmenden Verunreinigungen und Schlacken Sorge getragen werden. Zu diesem Zweck ist erfindungsgemäß die Gießwanne bevorzugt so weitergebildet, daß an einer von der Zufuhr für die Metallschmelze abgewandten Stirnfläche der Gießwanne eine Abführöffnung oder ein abgesetzter Seitenwandbereich zum Ausbringen von Schlacke vorgesehen ist.

Um eine ausreichende Gießgeschwindigkeit und gleichzeitig eine vollständige Abtrennung der Schlacke aufrecht zu erhalten, ist weiters bevorzugt die Ausbildung so getroffen, daß die Porenöffnungen des keramischen Filters und/oder die gesamte Querschnittsfläche des Filters derart gewählt sind, daß ein Durchfluß von etwa 0,01 bis 1,0 kg Schmelze/cm²s, insbesondere wenigstens 0,25 kg Schmelze/cm²s, erzielbar ist.

Insbesondere bei diskontinuierlichen Gießvorgängen kann es erforderlich sein, die Durchlässigkeit des Filters nach vollkommenem Durchtritt der Metallschmelze durch das Filter zu überprüfen, um festzustellen, ob gegebenenfalls ein Ersatz des Filters vor einem neuerlichen Gießvorgang erforderlich ist. Eine einfache Überprüfung der Durchlässigkeit des Filters kann hiebei durch Beaufschlagen desselben mit Preßluft erfolgen, wobei zu diesem Zweck erfindungsgemäß die Ausbildung bevorzugt so getroffen ist, daß oberhalb des Filters eine Vorrichtung zum Einbringen von Preßluft und dem Filter nachgeschaltet ein Sensor zur Messung der hindurchtretenden Preßluft nach vollkommener Entnahme der Metallschmelze anschließbar ist.

Die erfindungsgemäße Gießwanne wird nachfolgend anhand von in der Zeichnung dargestellten Ausführungsbeispielen näher erläutert, in welcher:
Fig. 1 einen schematischen Schnitt durch eine erfindungsgemäße Gießwanne zeigt;
Fig. 2 eine Draufsicht auf die erfindungsgemäße Gießwanne in Richtung des Pfeiles II auf die Ausführungsform gemäß Fig. 1 zeigt, wobei Fig. 1 einen Schnitt nach der Linie I-I der Fig.2 darstellt; und
Fig. 3 in einer zu Fig. 1 ähnlichen Darstellung einen schematischen Schnitt durch eine abgewandelte Ausführungsform einer erfindungsgemäßen Gießwanne zeigt.

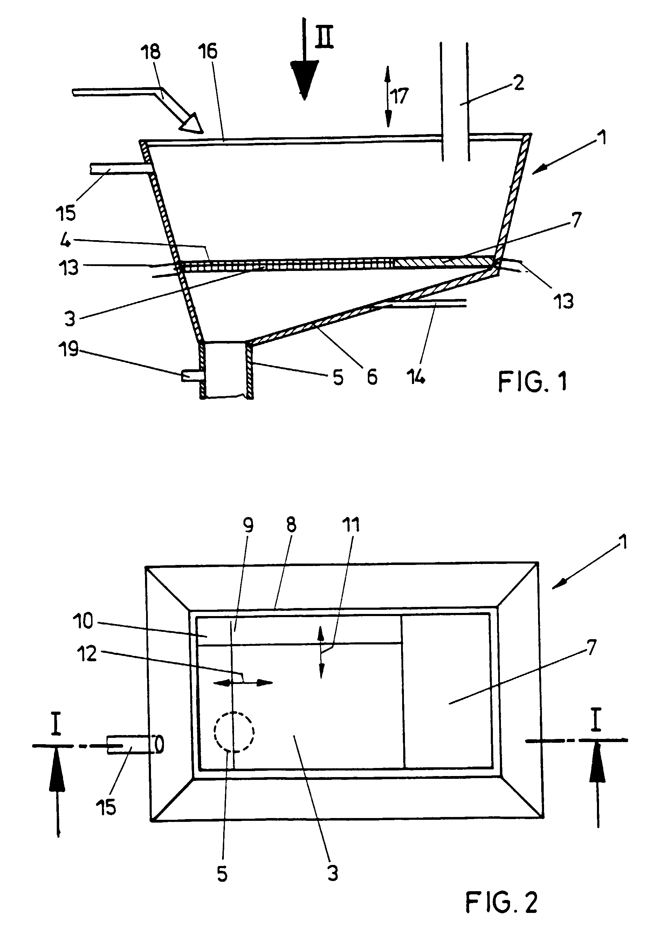

In Fig. 1 und 2 ist mit 1 allgemein eine Gießwanne bezeichnet, in welcher über eine Zuleitung 2, insbesondere ein Feuerfestrohr bzw. Feuerfestrinne, eine Metallschmelze aus einem nicht dargestellten, vorgeschalteten Konverter bzw. einer Pfanne zugeführt wird. Nach Durchtritt der Metallschmelze durch ein im wesentlichen den gesamten Querschnitt der Gießwanne 1 überdeckendes, entfernbares Filter 3, welches sich im wesentlichen in horizontaler Richtung erstreckt und mit im wesentlichen in vertikaler Richtung verlaufenden Durchtrittsöffnungen, welche schematisch mit 4 angedeutet sind, versehen ist, wird die Metallschmelze über eine Abführöffnung 5 aus einem trichterförmigen Bodenbereich 6 der Gießwanne 1 abgezogen. In einer mit der Ebene des Filters 3 im wesentlichen fluchtenden Ebene ist im Bereich der Zuleitung 2 eine Prallvorrichtung, beispielsweise ein Prallstein 7, vorgesehen, wodurch verhindert wird, daß die über die Zuleitung 2 zugeführte Metallschmelze unmittelbar auf das Filter 3 auftrifft und die mitgeführten Verunreinigungen bzw. Schlacken in diesem Bereich das Filter 3 unmittelbar verlegen.

In einfacher Weise ist das Filter 3 in einem im Bereich des Bodens der Gießwanne 1 bzw. in einem als Zwischenboden ausgebildeten, auswechselbaren Rahmen 8 angeordnet, wie dies in Fig. 2 schematisch angedeutet ist. Dieser Rahmen 8 kann zusätzlich Blendenelemente 9 und 10 aufweisen, mit welchen durch einfaches Verschieben eine Änderung der wirksamen Querschnittsfläche des Filters 3 im Sinne der Doppelpfeile 11 und 12 möglich wird. Durch Änderung der Position der Blendenelemente 9 und 10 läßt sich die wirksame Durchtrittsfläche des Filters 3 an die Erfordernisse, beispielsweise eine bestimmte Gießgeschwindigkeit oder dgl. anpassen.

Um zu verhindern, daß auch bei relativ geringen Durchtrittsgeschwindigkeiten durch das Filter 3 eine zu starke Abkühlung und somit ein Erstarren der Metallschmelze im Bereich des Filters 3 auftritt, wodurch das Filter 3 durch die erstarrende Metallschmelze bzw. erstarrende Verunreinigungen verlegt wird, ist weiters im Bereich des Filters eine Heizvorrichtung 13 vorgesehen, wie dies in Fig. 1 schematisch angedeutet ist. Diese Heizvorrichtung 13 kann entweder nur im Bereich der Umfangswand der Gießwanne 1 vorgesehen sein oder auch mit entsprechenden Heizvorrichtungen im das Filter 3 aufnehmenden Rahmen 8 gekoppelt sein, so daß eine entsprechend gewünschte Temperatur des Filters 3 aufrecht erhalten werden kann.

Um unerwünschte chemische Reaktionen in der Metallschmelze nach dem Durchtritt durch das Filter 3 weitestgehend zu vermeiden, ist zusätzlich im trichterförmigen Bodenbereich 6 der Gießwanne 1 eine Zuführöffnung 14 zum Einbringen eines Inertgases in die gereinigte Schmelze vorgesehen.

Insbesondere bei Einsatz der Gießwanne 1 für ein kontinuierliches Gießverfahren muß dafür Sorge getragen werden, daß sich ansammelnde Verunreinigungen bzw. Schlacke, welche auf der Metallschmelze auf schwimmt, aus der Gießwanne 1 entfernt werden können, wozu eine Abführöffnung 15 an einer von der Zufuhr 2 abgewandten Wand der Gießwanne 1 vorgesehen ist. Anstelle einer derartigen Abführöffnung 15 kann naturgemäß auch ein abgesetzter Bereich im oberen Abschnitt dieser Stirnwand vorgesehen sein.

Um ein Spritzen der Metallschmelze beim Einbringen derselben in die Gießwanne zu vermeiden und weiters eine übermäßige Abkühlung der Metallschmelze während der Filterung bzw. Reinigung in der Gießwanne 1 zu vermeiden, ist darüberhinaus eine Abdeckung bzw. ein Deckel 16 vorgesehen, welcher im Sinne des Doppelpfeiles 17 heb- und senkbar ist.

Bei Verwendung der Gießwanne 1 im diskontinuierlichen Gießbetrieb kann es zwischen den einzelnen Gießvorgängen erforderlich sein, die Durchlässigkeit des Filters 3 zu überprüfen, um zu entscheiden, ob ein Tausch des Filters 3 durch einfache Entnahme des Rahmens 8 erforderlich ist. Eine derartige Überprüfung der Durchlässigkeit des Filters 3 kann hiebei beispielsweise mit Preßluft erfolgen, wobei nach vollkommener Entnahme der Metallschmelze aus der Gießwanne 1 Preßluft auf das Filter 3 aufgeblasen wird, wie dies schematisch durch die Zuführleitung 18 angedeutet ist, worauf in weiterer Folge über einen in der Abführöffnung 5 vorgesehenen Sensor 19 die erzielbare Durchlässigkeit des Filters 3 ermittelt wird.

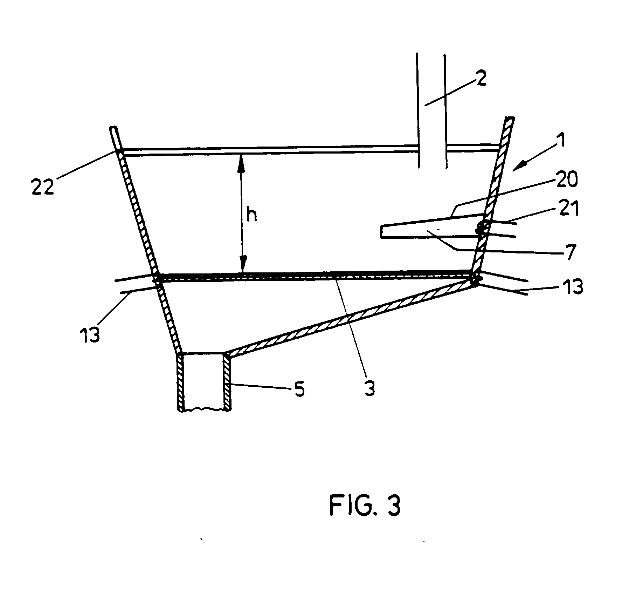

Bei der Darstellung gemäß Fig. 3 sind für gleiche Bauteile die Bezugszeichen der vorangehenden Figuren beibehalten worden. Bei dieser Ausführungsform einer Gießwanne 1 ist eine Prallvorrichtung 7 in Form eines Prallsteines oberhalb des Filters 3 angeordnet, wobei die der Zufuhr 2 für die Metallschmelze zugewandte Oberfläche 20 dieser Prallvorrichtung 7 ein wenig relativ zur horizontalen Ebene geneigt verläuft und insgesamt in einer Höhe angeordnet ist, welche etwa ein Drittel der Badhöhe h der Schmelze in der Gießwanne 1 beträgt. Um im Bereich der Prallvorrichtung 7 ein Erstarren der Schmelze und/oder Verunreinigungen mit Sicherheit zu vermeiden, ist darüberhinaus eine Heizung 21 im Bereich der Prallvorrichtung 7 vorgesehen. Zum Abziehen der Schlacke ist bei dieser Ausführungsform ein abgesetzter Seitenwandbereich an der von der Zufuhr 2 entfernt liegenden Wand der Gießwanne 1 vorgesehen, welcher schematisch mit 22 angedeutet ist.

## Patentansprüche

1. Gießwanne (1) zur Aufnahme und zur Filterung von Eisen-Metallschmelzen, welche im Bodenbereich eine Abfuhröffnung (5) zum Abziehen der Metallschmelze nach Durchtritt durch eine Umlenk- und/oder Filtereinrichtung aufweist, dadurch gekennzeichnet, daß in der Gießwanne ein im wesentlichen den gesamten, horizontalen Querschnitt der Gießwanne (1) überdeckendes, in an sich bekannter Weise entfernbares, keramisches Filter (3) angeordnet ist, welches sich im wesentlichen in horizontaler Richtung erstreckt und mit Durchtrittsöffnungen (4) versehen ist, welche in der im wesentlichen in vertikaler Richtung verlaufenden Durchflußrichtung der Metallschmelze durch die Gießwanne (1) angeordnet sind.

2. Gießwanne nach Anspruch 1, dadurch gekennzeichnet, daß im Bereich der Zufuhr (2) der Metallschmelze in mit dem Filter (3) fluchtender Ebene oder in einer oberhalb des Filters (3) liegenden Ebene eine Prallvorrichtung (7), insbesondere ein Prallstein, in der Gießwanne (1) angeordnet ist.

3. Gießwanne nach Anspruch 2, dadurch gekennzeichnet, daß die der Zufuhr (2) der Metallschmelze zugewandte Oberfläche (20) der Prallvorrichtung (7) in einem Abstand von weniger als der Hälfte der Badhöhe (h) der Metallschmelze, insbesondere etwa einem Drittel der Badhöhe (h), über der Ebene des Filters (3) angeordnet ist.

4. Gießwanne nach Anspruch 1, 2 oder 3, dadurch gekennzeichnet, daß das Filter (3) in einem im Bereich des Bodens der Gießwanne (1) angeordneten bzw. den Boden ausbildenden, auswechselbaren, an sich bekannten Rahmen (8) aufgenommen ist.

5. Gießwanne nach einem der Ansprüche 1 bis 4, dadurch gekennzeichnet, daß die Querschnittsfläche des Filters (3) durch Blendenelemente (9, 10) veränderbar ist.

6. Gießwanne nach einem der Ansprüche 1 bis 5, dadurch gekennzeichnet, daß im Bereich des Filters (3) und/oder der Prallvorrichtung (7) eine Heizvorrichtung (13, 20) vorgesehen ist.

7. Gießwanne nach einem der Ansprüche 1 bis 6, dadurch gekennzeichnet, daß unterhalb der Ebene des Filters (3) wenigstens eine Zuführöffnung (14) zum Einbringen eines Inertgases in die gereinigte Metallschmelze vorgesehen ist.

8. Gießwanne nach einem der Ansprüche 1 bis 7, dadurch gekennzeichnet, daß an einer von der Zufuhr (2) für die Metallschmelze abgewandten Stirnfläche der Gießwanne (1) eine Abführöffnung (15) oder ein abgesetzter Seitenwandbereich (22) zum Ausbringen von Schlacke vorgesehen ist.

9. Gießwanne nach einem der Ansprüche 1 bis 8, dadurch gekennzeichnet, daß die Porenöffnungen (4) des keramischen Filters (3) und/oder die gesamte Querschnittsfläche des Filters (3) derart gewählt sind, daß ein Durchfluß von etwa 0,01 bis 1,0 kg Schmelze/cm²s, insbesondere wenigstens 0,25 kg Schmelze/cm²s, erzielbar ist.

10. Gießwanne nach einem der Ansprüche 1 bis 9, dadurch gekennzeichnet, daß oberhalb des Filters (3) eine Vorrichtung (18) zum Einbringen von Preßluft und dem Filter (3) nachgeschaltet ein Sensor (19) zur Messung der hindurchtretenden Preßluft nach vollkommener Entnahme der Metallschmelze anschließbar ist.
